# EUROPEAN PATENT SPECIFICATION

(11) **EP 3 005 450 B1**
(45) Date of publication and mention of the grant of the patent: **26.04.2017**
(21) Application number: 14733865.1
(22) Date of filing: 29.05.2014
(51) Int. Cl.: H01M 4/134, H01M 4/62, H01M 4/1395, H01M 10/0525

(54) **ELECTRODE COMPOSITION, ELECTROCHEMICAL CELL AND METHOD OF MAKING ELECTROCHEMICAL CELLS**
ELEKTRODENZUSAMMENSETZUNG, ELEKTROCHEMISCHEN ZELLE UND VERFAHREN ZUR HERSTELLUNG ELEKTROCHEMISCHEN ZELLEN
COMPOSITION D'ÉLECTRODE, CELLULE ÉLECTROCHIMIQUE ET PROCÉDÉ DE FABRICATION DE CELLULES ÉLECTROCHIMIQUES

(30) Priority: 30.05.2013 US 201361828848 P
(43) Date of publication of application: 13.04.2016
(73) Proprietor: 3M Innovative Properties Company, St. Paul, MN 55133-3427 (US)
(72) Inventor: FIGGEMEIER, Egbert F., Neuss 41453 (DE); CHEVRIER, Vincent J., Saint Paul, Minnesota 55133-3427 (US); LE, Dinh Ba, Saint Paul, Minnesota 55133-3427 (US); LIU, Li, Saint Paul, Minnesota 55133-3427 (US); LUND, Jesse D., Saint Paul, Minnesota 55133-3427 (US)
(74) Representative: Vossius & Partner Patentanwälte Rechtsanwälte mbB
(86) International application number: PCT/US2014/039892
(87) International publication number: WO 2014/194019

(56) References cited:
- WO-A1-2007/029934
- CN-A- 102 227 022
- JP-A- 2004 349 164
- US-A1- 2011 163 274

## Description

### CROSS REFERENCE TO RELATED APPLICATIONS

This application claims priority to U.S. Provisional Patent Application No. 61/828,848, filed May 30, 2013.

### FIELD OF THE INVENTION

The present invention relates to electrode compositions, electrochemical cells, and methods of making electrochemical cell electrodes.

### BACKGROUND

Powdered alloys and conductive powders such as carbon black have been used to make electrodes for lithium-ion cells in a process that involves mixing the powdered active ingredients with a polymeric binder such as polyvinylidene fluoride. The mixed ingredients are prepared as a dispersion in a solvent for the polymeric binder, and coated onto a metal foil substrate, or current collector. The resulting composite electrode contains the powdered active ingredient in the binder, adhered to the metal substrate. For example US 2011/0163274 A1 and WO2007/029934 A1 describe electrode compositions with a silicon alloy comprising silicon and iron and a conductive additive comprising carbon nanotubes. Secondary electrochemical cells, such as lithium-ion cells, are capable of being reversibly charged and discharged multiple times. In the case of lithium-ion batteries, the charging and the discharging of the lithium-ion electrochemical cells are accomplished by lithiating and delithiating the cell electrodes.

When lithium-ion cells are constructed, they usually contain lithium ions in the positive electrode and no lithium ions in the negative electrode. During the initial cycling reaction of the cells (charging), lithium transfers from the positive electrode to the negative electrode until the negative electrode has reached its capacity of absorbing lithium-ions. Upon the first discharge, the lithium-ions migrate from the lithiated negative electrode back to the positive electrode.

Typically, after the first charging not all of the lithium-ions in the negative electrode are able to migrate out of the negative electrode. This results in what is known as irreversible loss in the capacity of the cell. Loss in the capacity of a cell from additional cycling (after the first cycle) is called capacity fade. Causes of capacity fade include changes in the morphology of the electrode material upon repeated cycling, a buildup of insulating layers on the active electrode material upon repeated cycling or other reasons.

### SUMMARY

A desirable lithium-ion cell is one that has low volume expansion on cycling, and has low capacity loss (fade) after multiple cycles.

It would be advantageous to provide electrode compositions that may be used to make electrodes that provide a reduced capacity loss after multiple cycles and lower volume expansion on cycling.

In a first aspect, the invention accordingly provides an electrode composition according to claim 1. Surprisingly, the inventors have discovered that the use of a conductive additive comprising carbon nanotubes in producing an electrode composition provides reduced fade and reduced volume expansion after multiple cycles. The disclosed electrodes containing carbon nanotube conductive/conductivity additives can improve cycle life in rechargeable lithium-ion cells employing electrodes based on (preferably small particle) alloy powders. The disclosed conductivity additives can also allow fabrication of rechargeable lithium-ion cells having improved capacities.

Preferably the composition comprises 10wt% to 80wt% silicon alloy, preferably 20wt% to 70wt% silicon alloy more preferably 30wt% to 70wt% silicon alloy, and most preferably 40wt% to 70wt% silicon alloy.

Preferably, the composition comprises 80wt% to 10wt% graphitic carbon, 40wt% to 15wt% graphitic carbon, and more preferably 35wt% to 20wt% graphitic carbon.

Preferably, the composition comprises 1wt % to 20wt%, 2wt% to 20wt% binder, more preferably 4wt% to 15wt% binder or 4wt% to 12wt% binder, most preferably 4wt% to 10wt% binder.

Preferably, the composition comprises 0.2wt% to 10wt% carbon nanotubes, more preferably 0.5wt% to 5wt% carbon nanotubes, and most preferably 1wt% to 3wt% carbon nanotubes.

Electrode compositions according to the present invention may be used in negative or positive electrodes.

Preferably however, the composition would be used in a negative electrode (anode).

The binder preferably comprises polyacrylate. More preferably, the binder comprises lithium polyacrylate. Lithium polyacrylate can be made from poly(acrylic acid) that is neutralized with lithium hydroxide.

In this application, poly(acrylic acid) includes any polymer or copolymer of acrylic acid or methacrylic acid or their derivatives where at least about 50 mole %, at least about 60 mole %, at least about 70 mole %, at least about 80 mole %, or at least about 90 mole % of the copolymer is made using acrylic acid or methacrylic acid. Useful monomers that can be used to form these copolymers include, for example, alkyl esters of acrylic or methacrylic acid that have alkyl groups with 1-12 carbon atoms (branched or unbranched), acrylonitriles, acrylamides, N-alkyl acrylamides, N,N-dialkylacrylamides, hydroxyalkylacrylates, and the like. Of particular interest are polymers or copolymers of acrylic acid or methacrylic acid that are water soluble - especially after neutralization or partial neutralization. Water solubility is typically a function of the molecular weight of the polymer or copolymer and/or the composition. Poly(acrylic acid) is very water soluble and is preferred along with copolymers that contain significant mole fractions of acrylic acid. Poly(methacrylic) acid is less water soluble-particularly at larger molecular weights.

The binder may be blended with other polymeric materials to make a blend of materials. This may be done, for example, to increase the adhesion, to provide enhanced conductivity, to change the thermal properties or to affect other physical properties of the binder.

The electrode composition can include an adhesion promoter that promotes adhesion of the powdered material or electrically conductive additive to the binder. The combination of an adhesion promoter and binder can help the electrode composition better accommodate volume changes that can occur in the powdered material during repeated lithiation/delithiation cycles.

If used, an adhesion promoter can be made a part of the lithium polyacrylate binder (e.g., in the form of an added functional group), can be a coating on the powdered material, can be added to the conductive additive, or can be a combination of such measures. Examples of adhesion promoters include silanes, titanates, and phosphonates.

A variety of silicon alloys can be employed to make the electrode compositions. Exemplary silicon alloys can, for example, contain in addition to silicon and iron, silver, lithium, tin, bismuth, lead, antimony, germanium, zinc, gold, platinum, palladium, arsenic, aluminum, gallium, indium, thallium, molybdenum, niobium, tungsten, tantalum, copper, titanium, vanadium, chromium, nickel, cobalt, zirconium, yttrium, carbon, oxygen, a lanthanide, an actinide or an alloy containing any of the foregoing metals or metalloids and other powdered active metals and metalloids that will be familiar to those skilled in the art.

The silicon alloy and/or graphitic components of the composition are preferably in particle/powder form. Such powders may have a maximum length in one dimension that is no greater than 60 µm, no greater than 40 µm, or no greater than 20 µm, or even smaller. The powders can, for example, have a maximum particle diameter that is submicron, at least 1 µm, at least 2 µm, at least 5 µm, or at least 10 µm or even larger. For example, suitable powders often have a maximum dimension of 1 to 60 µm, 10 to 60 µm, 20 to 60 µm, 40 to 60 µm, 1 to 40 µm, 2 to 40 µm, 10 to 40 µm, 5 to 20 µm, or 10 to 20 µm or 1 to 30 µm, 1 to 20 µm, 1 to 10 µm, or 0.5 to 30 µm, 0.5 to 20 µm, 0.5 to 10 µm.

Alloy anode materials are usually amorphous or nanocrystalline (i.e. crystallite grains having a dimension of 50 nm or less, the size of crystallite being determined by X ray diffraction and the Scherrer method) to improve cycling performance. Such microstructures are typically made by meltspinning, mechanical milling, or sputtering. Of these, melt spinning and mechanical milling are the most commercially viable.

Useful alloys can have a nanocrystalline or amorphous microstructure. X-ray diffraction can be used to determine the grain sizes present in the alloy. Useful alloys can have a microstructure where the largest grain size as determined by the Scherrer equation is less than 50 nm, more preferably less than 40 nm, more preferably less than 30 nm, more preferably less than 15 nm, more preferably less than 10 nm, most preferably less than 5 nm.

An example of a useful Si alloy is an alloy of the formula SiₓM_{y}C_{z} where x, y, and z represent atomic percent values and a) x > 2y + z; (b) x, y and z are greater than 0; and (c) M is at least iron and may be iron in combination with one or more metals selected from manganese, molybdenum, niobium, tungsten, tantalum, copper, titanium, vanadium, chromium, nickel, cobalt, zirconium, yttrium, or combinations thereof.

Thus, the silicon alloy is of formula SiₓFe_{y}C_{z}, where x, y and z represent atomic percent values and a) x > 2y + z, and b) x, y and z are each greater than 0.

Preferably x ≥ 60, and/or y ≥ 5.

A particularly preferred silicon alloy comprises from about 60 to about 80 atomic percent silicon, from about 5 to about 20 atomic percent iron, and from about 5 to about 15 atomic percent carbon.

The most preferred silicon alloy may have a formula of Si₇₃Fe₁₇C₁₀ where the numbers represent atomic percent and with a range of atomic percent for each component ± 10 atomic percent, preferably ± 7 atomic percent, more preferably ± 5 atomic percent and most preferably ± 3 atomic percent.

The particles of the alloys may include a coating at least partially surrounding the particle. By "at least partially surrounding" it is meant that there is a common boundary between the coating and the exterior of the particle. The coating can function as a chemically protective layer and can stabilize, physically and/or chemically, the components of the provided particle. Additionally, coatings useful for stabilizing lithium metal can also be useful as coatings for the provided particle. Other exemplary materials useful for coatings include amorphous carbon, graphitic carbon, LiPON glass, phosphates such as lithium phosphate (Li₂PO₃), lithium metaphosphate (LiPO₃), lithium dithionate (LiS₂O₄), lithium fluoride (LiF), lithium metasilicate (LiSiO₃), and lithium orthosilicate (Li₂SiO₄). The coating can be applied by milling, solution deposition, vapor phase processes, or other processes known to those of ordinary skill in the art.

The electrode composition can contain additives such as will be familiar to those skilled in the art. The electrode composition can include an electrically conductive diluent to facilitate electron transfer from the powdered material to a current collector. Electrically conductive diluents include, but are not limited to, carbon (e.g., carbon black for negative electrodes and carbon black, flake graphite and the like for positive electrodes), metal, metal nitrides, metal carbides, metal silicides, and metal borides. Representative electrically conductive carbon diluents include carbon blacks such as SUPER P and SUPER S carbon blacks (both from MMM Carbon, Timcal, Belgium), SHAWANIGAN BLACK (Chevron Chemical Co., Houston, TX), acetylene black, furnace black, lamp black, graphite, carbon fibers and combinations thereof.

In a second aspect, the invention provides an electrochemical cell comprising a positive electrode, a negative electrode; and an electrolyte, wherein the negative electrode comprises a composition as discussed in relation to the first aspect.

In a third aspect, the present invention provides a battery comprising two or more electrochemical cells according to the second aspect.

In a fourth aspect, the invention provides a method of making an electrochemical cell electrode, the method comprising providing a current collector, providing an electrode composition in accordance with the first aspect; and applying to the current collector a coating that comprises the electrode composition.

To make an electrode, preferably a negative electrode, the silicon alloy, graphitic carbon, binder and conductive additive comprising carbon nanotubes and any selected additives such as conductive diluents, fillers, adhesion promoters, thickening agents for coating viscosity modification such as carboxymethylcellulose and other additives known by those skilled in the art are mixed in a suitable coating solvent such as water or N-methylpyrrolidinone (NMP) to form a coating dispersion or coating mixture. The dispersion is mixed thoroughly and then applied to a foil current collector by any appropriate dispersion coating technique such as knife coating, notched bar coating, dip coating, spray coating, electrospray coating, or gravure coating. The current collectors are typically thin foils of conductive metals such as, for example, copper, aluminum, stainless steel, or nickel foil. The slurry is coated onto the current collector foil and then allowed to dry in air followed usually by drying in a heated oven, typically at about 80°C to about 300°C for about an hour to remove all of the solvent.

A variety of electrolytes can be employed in a lithium-ion cell. Representative electrolytes contain one or more lithium salts and a charge-carrying medium in the form of a solid, liquid or gel. Exemplary lithium salts are stable in the electrochemical window and temperature range (e.g. from about -30° C to about 70° C) within which the cell electrodes may operate, are soluble in the chosen charge-carrying media, and perform well in the chosen lithium-ion cell. Exemplary lithium salts include LiPF₆, LiBF₄, LiClO₄, lithium bis(oxalato)borate, LiN(CF₃SO₂)₂, LiN(C₂F₅SO₂)₂, LiAsF₆, LiC(CF₃SO₂)₃, and combinations thereof. Exemplary charge-carrying media are stable without freezing or boiling in the electrochemical window and temperature range within which the cell electrodes can operate, are capable of solubilizing sufficient quantities of the lithium salt so that a suitable quantity of charge can be transported from the positive electrode to the negative electrode, and perform well in the chosen lithium-ion cell. Exemplary solid charge carrying media include polymeric media such as polyethylene oxide, polytetrafluoroethylene, polyvinylidene fluoride, fluorine-containing copolymers, polyacrylonitrile, combinations thereof and other solid media that will be familiar to those skilled in the art. Exemplary liquid charge carrying media include ethylene carbonate, propylene carbonate, dimethyl carbonate, diethyl carbonate, ethyl-methyl carbonate, butylene carbonate, vinylene carbonate, fluoroethylene carbonate, fluoropropylene carbonate, γ-butylrolactone, methyl difluoroacetate, ethyl difluoroacetate, dimethoxyethane, diglyme (bis(2-methoxyethyl) ether), tetrahydrofuran, dioxolane, combinations thereof and other media that will be familiar to those skilled in the art.

The charge carrying media solubilizing power can be improved through addition of a suitable cosolvent. Exemplary cosolvents include aromatic materials compatible with Li-ion cells containing the chosen electrolyte. Representative cosolvents include toluene, sulfolane, dimethoxyethane, combinations thereof and other cosolvents that will be familiar to those skilled in the art. The electrolyte can include other additives that will familiar to those skilled in the art. For example, the electrolyte can include vinylene carbonate or fluorethylene carbonate for stabilizing passivation layers on the anode. Electrochemical cells of this invention are made by taking at least one each of a positive electrode and a negative electrode as described above and placing them in an electrolyte. Typically, a microporous separator, such as CELGARD 2400 microporous material, available from Hoechst Celanese, Corp., Charlotte, N.C., is used to prevent the contact of the negative electrode directly with the positive electrode. This is especially important in coin cells such as, for example, 2325 coin cells as known in the art.

Electrochemical cells made with the negative electrodes of this invention showed reduced fade than similar cells containing conventional negative electrodes and reduced volume expansion after multiple cycles.

The disclosed cells can be used in a variety of devices, including portable computers, tablet displays, personal digital assistants, mobile telephones, motorized devices (e.g., personal or household appliances and vehicles), instruments, illumination devices (e.g., flashlights) and heating devices. One or more electrochemical cells of this invention can be combined to provide battery pack. Further details regarding the construction and use of rechargeable lithium-ion cells and battery packs will be familiar to those skilled in the art.

In this specification:
the phrase "carbon nanotube" refers to allotropes of carbon having a tube-like or scroll-like structure with the diameter of the tube being in the scale of between 0.1nm and 100 nm or larger, with a length that may be in a similar scale or many times greater (e.g. larger than 1 µm);
the phrase "positive electrode" refers to an electrode (often called a cathode) where electrochemical reduction and lithiation occurs during a discharging process; and
the phrase "negative electrode" refers to an electrode (often called an anode) where electrochemical oxidation and delithiation occurs during a discharging process;
the terms "charge" and "charging" refer to a process for providing electrochemical energy to a cell;
the terms "discharge" and "discharging" refer to a process for removing electrochemical energy from a cell, e.g., when using the cell to perform desired work;
the term "metal" refers to both metals and to metalloids such as silicon and germanium, whether in an elemental or ionic state;
the term "alloy" refers to a mixture of two or more metals;
the terms "lithiate" and "lithiation" refer to a process for adding lithium to an electrode material;
the terms "delithiate" and "delithiation" refer to a process for removing lithium from an electrode material;

Unless the context requires otherwise, the terms "aliphatic", "cycloaliphatic" and "aromatic" include substituted and unsubstituted moieties containing only carbon and hydrogen, moieties that contain carbon, hydrogen and other atoms (e.g., nitrogen or oxygen ring atoms), and moieties that are substituted with atoms or groups that may contain carbon, hydrogen or other atoms (e.g., halogen atoms, alkyl groups, ester groups, ether groups, amide groups, hydroxyl groups or amine groups).

### DETAILED DESCRIPTION

The invention is illustrated by the drawing in which:

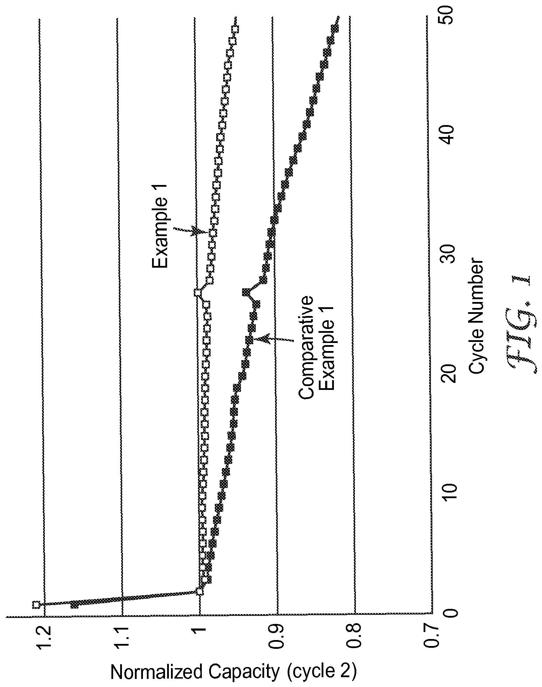

Figure 1 illustrates normalized capacity as function of cycle number for Example 1 and Comparative Example 1.

The invention is further illustrated in the following illustrative examples.

### EXAMPLES

An alloy of composition Si₇₃Fe₁₇C₁₀ was produced by low energy ball milling using the same general procedure as disclosed in U.S. Patent No.7,906,238 B2 (Le).

Silicon, and iron were obtained from either Alfa Aesar of Ward Hill, Mass., Aldrich Chemical Company of Milwaukee, Wis. or Alcan Metal Powders of Berkeley, CA.

Appropriate amounts of silicon chips (Alfa Aesar, catalog no. 00311), iron and graphite powder (MCMB-1028, MMM Carob, Belgium) were milled with 28 tungsten carbide balls (each approximately 108 grams) for 4 hours in a 45 milliliter tungsten carbide vessel using a SPEX MILL (Model 8000-D, Spex CertiPrep, Metuchen, N.J.) under an argon atmosphere. The vessel was then opened, chunks of caked powder were broken up, and the milling was continued for an additional hour in an argon atmosphere. The temperature of the tungsten carbide vessel was maintained at about 30° C by air cooling.

### EXAMPLE 1

### 60wt % Si₇₃Fe₁₇C₁₀, 28wt %, Graphite, 2wt% carbon nanotubes (CNT), 10wt% LiPAA.

35 wt% polyacrylic acid solution (Sigma Aldrich; 250000 Mw) was diluted with deionized water to 10 wt% and neutralized with lithium hydroxide powder. Carbon nanotubes (CNT, C70P, commercially available from Bayer MaterialScience AG) were added and dispersed with a high shear mixer (Primix) until a uniform 2 wt% carbon nanotubes dispersion in lithium polyacrylic (LiPAA) solution was achieved. After achieving a homogeneous dispersion of carbon nanotubes in lithium polyacrylate, 28wt % graphite (Hitachi, MAG-E) was added and mixed in a planetary micro mill on level 9 (Mazerustar Model KK-400 WE) for 18 minutes. The as-produced dispersion was homogeneous.

Finally the dispersion containing lithium polyacrylate, carbon nanotubes and graphite was mixed with the silicon alloy and again mixed in a planetary micro mill on level 9 (Mazerustar Model KK-400 WE) for 18 minutes resulting in a paste ready for coating.

The resulting paste had a composition of 60wt% Si₇₃Fe₁₇C₁₀, 28wt% graphite, 2wt% CNT and 10wt% LiPAA.

This suspension was coated, using a coating bar, on Cu foil and the coating was stamped in round electrodes ready for coin-shaped electrochemical cells assembled as described below in the section headed Test Cell Assembly.

### EXAMPLE 2

### 26.4 wt% Si₇₃Fe₁₇C₁₀, 10 wt% High Surface Area graphite, 51.6wt % larger grain graphite, 2wt % CNT

35 wt% polyacrylic acid solution (Sigma Aldrich; 250000 Mw) was diluted with deionized water to 10 wt% and neutralized with lithium hydroxide powder.
A commercially available aqueous dispersion of CNT (5 wt% CNT, 5 wt% carboxy methyl cellulose, Baytubes^{®} D W 55 CM, Bayer MaterialScience) was added so that the weight ratio of lithium polyacrylic acid (solid content) and CNT was 4. The aqueous dispersion of CNT (Baytubes^{®} D W 55 CM, Bayer MaterialScience) also contained 5 wt% carboxy methyl cellulose. The dispersion was then homogenized in a planetary micro mill on level 9 Mazerustar Model KK-400 WE) for 18 minutes.

After achieving a homogeneous dispersion of carbon nanotubes with lithium polyacrylic acid and carboxy methyl cellulose in water, successively high surface area graphite (D50 of 3 um, specific surface area of 20 m²/g, KS6, Timcal) and larger grain graphite with lower surface area (D50 of 21 um, BET of 0.7 m²/g, HE1; Hitachi Chemicals) were added. The amounts added were adjusted so that in the final paste including the silicon alloy, 10 wt% high surface area graphite and 51.6 % larger grain graphite were present. The paste was then mixed in a planetary micro mill on level 9 (Mazerustar Model KK-400 WE) for 18 minutes. The as-produced dispersion was homogeneous.

Finally the dispersion containing lithium polyacrylate, carbon nanotubes and graphite was mixed with the silicon alloy and again mixed in a planetary micro mill on level 9 (Mazerustar Model KK-400 WE) for 18 minutes resulting in a paste ready for coating. The resulting paste had a composition of 26.4 wt% Si₇₃Fe₁₇C₁₀, 10 wt% high surface area graphite, 51.6 wt% larger grain size graphite, and 2 wt% CNT.

This suspension was coated using a coating bar on Cu foil and the coating was stamped in round electrodes ready for coin-shaped electrochemical cells assembled as described below under the heading Test Cell Assembly.

### COMPARATIVE EXAMPLE 1

### 60 wt% Si₇₃Fe₁₇C₁₀ Alloy, 28wt% Graphite, 2 wt% Carbon Black, 10wt % LiPAA.

35 wt% polyacrylic acid solution (Sigma Aldrich; 250000 Mw) was diluted with deionized water to 10 wt% and neutralized with lithium hydroxide powder. Carbon black (SuperP, Timcal) was added and dispersed by mixing in a planetary micro mill on level 9 (Mazerustar Model KK-400 WE) for 6 minutes until a uniform 2 wt% carbon black dispersion in lithium polyacrylic solution (LiPAA) was achieved.
After achieving a homogeneous dispersion of carbon black in lithium polyacrylate, 28wt% graphite (Hitachi, MAG-E) was added and mixed in a planetary micro mill on level 9 (Mazerustar Model KK-400 WE) for 18 minutes. The so-produced dispersion was checked for homogeneity.

Finally, the dispersion containing lithium polyacrylate, carbon black and graphite was mixed with the silicon alloy (produced as discussed in Example 1) and again mixed in a planetary micro mill on level 9 (Mazerustar Model KK-400 WE) for 18 minutes resulting in a paste ready for coating.

The resulting paste had a composition of 60 wt% Si₇₃Fe₁₇C₁₀, 28 wt% Graphite, 2 wt% carbon black and 10 wt% LiPAA.

This suspension was coated using a coating bar on Cu foil and the coating was stamped in round electrodes ready for coin-shaped electrochemical cells assembled as described below under the heading Test Cell Assembly.

### COMPARATIVE EXAMPLE 2

### 26.4wt % Si₇₃Fe₁₇C₁₀ alloy, 18.0wt % high surface area graphite, 43.6wt% larger grain size graphite, 2wt % carbon black, 10wt % LiPAA

35 wt% polyacrylic acid solution (Sigma Aldrich; 250000 Mw) was diluted with deionized water to 10 wt% and neutralized with lithium hydroxide powder.

Carbon black (SuperP, Timcal) was added and dispersed by mixing in a planetary micro mill on level 9 (Mazerustar Model KK-400 WE) for 6 minutes until an uniform 2 wt% carbon black dispersion in lithium polyacrylic solution was achieved.

After achieving a homogeneous dispersion of carbon black in lithium polyacrylic acid successively high surface area graphite (KS6, Timcal) and larger grain graphite (HE1; Hitachi Chemicals) were added. The amounts added were adjusted so that in the final paste including the alloy 18.6 wt% high surface area graphite and 43.6 wt% larger grain graphite were achieved. The paste was then mixed in a planetary micro mill on level 9 (Mazerustar Model KK-400 WE) for 18 minutes. The as-produced dispersion was homogeneous.

Finally the dispersion containing lithium polyacrylate, carbon black and graphite was mixed with the silicon alloy and again mixed in a planetary micro mill on level 9 (Mazerustar Model KK-400 WE) for 18 minutes resulting in a paste ready for coating.

The resulting paste had a composition of 26.4 wt% Si₇₃Fe₁₇C₁₀ alloy, 18.0 wt% high surface area graphite, 43.6 wt% larger grain size graphite, 2 wt% carbon black, 10.0 wt% LiPAA.

This suspension was coated using a coating bar on Cu foil and the coating was stamped in round electrodes ready for coin-shaped electrochemical cells assembled as described below under the heading Test Cell Assembly.

### EXAMPLE 3

### 26.4 wt% Si₇₃Fe₁₇C₁₀ alloy, 61.6 wt % graphite, 2wt% CNT, 8wt % LiPAA, 2wt % CMC

35 wt% polyacrylic acid solution (Sigma Aldrich; 250000 Mw) was diluted with deionized water to 10 wt% and neutralized with lithium hydroxide powder.

A commercially available aqueous dispersion of CNT (5 wt% CNT, 5 wt% carboxy methyl cellulose (CMC), Baytubes^{®} D W 55 CM, Bayer MaterialScience) was added so that the weight ratio of lithium polyacrylic acid and CNT was 4. The dispersion was then homogenized in a planetary micro mill on level 9 Mazerustar Model KK-400 WE) for 18 minutes.

After achieving a homogeneous dispersion of carbon nanotubes in lithium polyacrylic acid and carboxy methyl cellulose, graphite (HE1, Hitachi Chemicals) was added. The paste was then mixed in a planetary micro mill on level 9 Mazerustar Model KK-400 WE) for 18 minutes. The as-produced dispersion was checked for homogeneity.

Finally the dispersion containing lithium polyacrylate, carbon nanotubes and graphite was mixed with the Silicon alloy and again mixed in a planetary micro mill on level 9 (Mazerustar Model KK-400 WE) for 18 minutes resulting in a paste ready for coating. The resulting paste had a composition of 26.4 wt% Si₇₃Fe₁₇C₁₀ alloy, 61.6 wt % graphite, 2wt% CNT, 8wt % LiPAA, 2wt % CMC.

This suspension was coated using a coating bar on Cu foil and the coating was stamped in round electrodes ready for coin-shaped electrochemical cells assembled as described below under the heading Test Cell Assembly.

### COMPARATIVE EXAMPLE 3

### 60 wt% Si₇₃Fe₁₇C₁₀ Alloy, 28 % graphite (MAGD). 2 wt% Carbon Black, 10wt % LiPAA.

35 wt% polyacrylic acid solution (Sigma Aldrich; 250000 Mw) was diluted with deionized water to 10 wt% and neutralized with lithium hydroxide powder.

Carbon black (SuperP, Timcal) was added and dispersed by mixing in a planetary micro mill on level 9 (Mazerustar Model KK-400 WE) for 6 minutes until a uniform 2 wt% carbon black dispersion in lithium polyacrylic solution (LiPAA) was achieved.

After achieving a homogeneous dispersion of carbon black in lithium polyacrylate, 28wt % graphite (Hitachi, MAG-D) was added and mixed in a planetary micro mill on level 9 (Mazerustar Model KK-400 WE) for 18 minutes. The as-produced dispersion was homogeneous.

Finally, the dispersion containing lithium polyacrylate, carbon black and graphite was mixed with the silicon alloy (produced as discussed in Example 1) and again mixed in a planetary micro mill on level 9 (Mazerustar Model KK-400 WE) for 18 minutes resulting in a paste ready for coating.

The resulting paste had a composition of 60 wt% Si₇₃Fe₁₇C₁₀, 28 wt% Graphite, 2 wt% carbon black and 10 wt% LiPAA.

This suspension was coated using a coating bar on Cu foil and the coating was stamped in round electrodes ready for coin-shaped electrochemical cells assembled as described below under the heading Test Cell Assembly.

### EXAMPLE 4

### 26.4 wt% Si₇₃Fe₁₇C₁₀ alloy, 10.0 wt% high surface area graphite (Timcal KS6), 51.6 wt% larger grain size graphite, (Hitachi Chemicals HE1), 2.5 wt% CNT, 9 wt% LiPAA and 0.5 % CMC

35 wt% polyacrylic acid solution (Sigma Aldrich; 250000 Mw) was diluted with deionized water to 10 wt% and neutralized with lithium hydroxide powder.

A commercially available aqueous dispersion of CNT (2.0 % wt% CNT, 0.5 wt% carboxy methyl cellulose (CMC), CNano) was added so that the weight ratio of lithium polyacrylic acid and CNT was 4. The dispersion was then homogenized in a planetary micro mill on level 9 Mazerustar Model KK-400 WE) for 18 minutes.

After achieving a homogeneous dispersion of carbon black in lithium polyacrylic acid successively high surface area graphite (KS6, Timcal) and larger grain graphite (HE1; Hitachi Chemicals) were added. The amounts added were adjusted so that in the final paste including the alloy 10.0 wt% high surface area graphite and 51.6 wt% larger grain graphite were achieved. The paste was then mixed in a planetary micro mill on level 9 (Mazerustar Model KK-400 WE) for 18 minutes. The as-produced dispersion was homogeneous.

The resulting paste had a composition of 26.4 wt% Si₇₃Fe₁₇C₁₀ alloy, 10.0 wt% high surface area graphite, 51.6 wt% larger grain size graphite, 2.5 wt% CNT, 9 wt% LiPAA and 0.5 % CMC.

This suspension was coated using a coating bar on Cu foil and the coating was stamped in round electrodes ready for coin-shaped electrochemical cells assembled as described below under the heading Test Cell Assembly.

### EXAMPLE 5

### 60wt % Si₇₃Fe₁₇C₁₀, 28wt %, graphite (Hitachi-MAGD), 2wt% carbon nanotubes (CNT-Bayer MaterialScience), 10wt% LiPAA.

35 wt% polyacrylic acid solution (Sigma Aldrich; 250000 Mw) was diluted with deionized water to 10 wt% and neutralized with lithium hydroxide powder. A commercially available aqueous dispersion of CNT (5 wt% CNT, 5 wt% carboxy methyl cellulose, Baytubes^{®} D W 55 CM, Bayer MaterialScience) was added so that the weight ratio of lithium polyacrylic acid (solid content) and CNT was 4. The aqueous dispersion of CNT (Baytubes^{®} D W 55 CM, Bayer MaterialScience) also contained 5 wt% carboxy methyl cellulose. After achieving a homogeneous dispersion of carbon nanotubes in lithium polyacrylate, 28wt % graphite (Hitachi, MAG-D) was added and mixed in a planetary micro mill on level 9 (Mazerustar Model KK-400 WE) for 18 minutes. The as-produced dispersion was homogeneous.

Finally the dispersion containing lithium polyacrylate, carbon nanotubes and graphite was mixed with the silicon alloy and again mixed in a planetary micro mill on level 9 (Mazerustar Model KK-400 WE) for 18 minutes resulting in a paste ready for coating.

The resulting paste had a composition of 60wt% Si₇₃Fe₁₇C₁₀, 28wt% graphite, 2wt% CNT and 10wt% LiPAA.

This suspension was coated, using a coating bar, on Cu foil and the coating was stamped in round electrodes ready for coin-shaped electrochemical cells assembled as described below in the section headed Test Cell Assembly.

### EXAMPLE 6

### 26.4 wt% Si₇₃Fe₁₇C₁₀, 18 wt% high surface area graphite (Timcal KS6), 43.6wt % larger grain graphite, (Hitachi Chemical HE1), 2wt % CNT (Bayer MaterialScience), 8wt% LiPAA, 2wt% CMC.

35 wt% polyacrylic acid solution (Sigma Aldrich; 250000 Mw) was diluted with deionized water to 10 wt% and neutralized with lithium hydroxide powder.

A commercially available aqueous dispersion of CNT (5 wt% CNT, 5 wt% carboxy methyl cellulose (CMC), Baytubes^{®} D W 55 CM, Bayer MaterialScience) was added so that the weight ratio of lithium polyacrylic acid (solid content) and CNT was 4. The aqueous dispersion of CNT (Baytubes^{®} D W 55 CM, Bayer MaterialScience) also contained 5 wt% carboxy methyl cellulose. The dispersion was then homogenized in a planetary micro mill on level 9
Mazerustar Model KK-400 WE) for 18 minutes.

After achieving a homogeneous dispersion of carbon nanotubes with lithium polyacrylic acid and carboxy methyl cellulose in water, successively high surface area graphite (D50 of 3 um, specific surface area of 20 m²/g, KS6, Timcal) and larger grain graphite with lower surface area (D50 of 21 um, BET of 0.7 m²/g, HE1; Hitachi Chemicals) were added. The amounts added were adjusted so that in the final paste including the silicon alloy, 10 wt% high surface area graphite and 51.6 % larger grain graphite were present. The paste was then mixed in a planetary micro mill on level 9 (Mazerustar Model KK-400 WE) for 18 minutes. The as-produced dispersion was homogeneous.

Finally the dispersion containing lithium polyacrylate, carbon nanotubes and graphite was mixed with the silicon alloy and again mixed in a planetary micro mill on level 9 (Mazerustar Model KK-400 WE) for 18 minutes resulting in a paste ready for coating. The resulting paste had a composition of 26.4 wt% Si₇₃Fe₁₇C₁₀, 10 wt% high surface area graphite, 51.6 wt% larger grain size graphite, 2 wt% CNT, 8wt% LiPAA and 2wt% CMC.

This suspension was coated using a coating bar on Cu foil and the coating was stamped in round electrodes ready for coin-shaped electrochemical cells assembled as described below under the heading Test Cell Assembly.

**Table 1**

| | **Capacity Retention after 50 cycles / %** | **Volume Expansion after 50 cycles / %** |
|---|---|---|
| Example 1 | 95 | - |
| Example 2 | 95 | 39 |
| Example 3 | - | 50 |
| Comparative Example 1 | 81 | - |
| Comparative Example 2 | 90 | 66 |
| Comparative Example 3 | 50 | 94 |
| Example 4 | 98 | 39 |
| Example 5 | 95 | 96 |
| Example 6 | 95 | 51 |

### TEST CELL ASSEMBLY

Disks (16 mm diameter) were cut from the electrode coatings for use in 2325-button cells. Each 2325 cell contains a 18 mm diameter disk of Cu as a spacer (900 µm thick), a 18 mm diameter disk of the alloy electrode, one 20 mm diameter microporous separator (CELGARD 2400; Separation Products, Hoechst Celanese Corp., Charlotte, N.C. 28273), 18 mm diameter disk of lithium (0.38 mm thick lithium ribbon; Aldrich Chemicals, Milwaukee, Wis.) and an 18 mm copper spacer (900 µm thick). One hundred micro liters of electrolyte solution (1M LiPF₆ in 90 wt% ethylene carbonate (EC):diethylene carbonate (DEC)(1:2 v/v ))(Ferro Chemicals (Zachary, La.); 10 wt% fluoroethylene carbonate (FEC)(Fujian Chuangxin Science and Technology Development, LTP, Fujian, China)) were mixed and used as the electrolyte. The electrolyte mixture was dried over molecular sieves (3A type) over 12 hours. The coin cells were charged and discharged from 0.005 V to 0.9 V with a constant current of 250 mA/g. During charging, when the cell voltage reached 0.9 V, the cell voltage was held constant and the charging continued until the current reached 10 mA/g. The cell was allowed to remain at open circuit for fifteen minutes at the end of every half cycle.

Volume expansion of the negative electrode was calculated by measuring the thickness of the fresh coated electrode (denoted to, includes current collector and coated composite) using a drop-down micrometer and 60 psi (414 kPa) of pressure. The thickness of the Cu current collector (t_{c}) was measured with the same micrometer. The volume expansion after the first lithiation was obtained by disassembling a discharged half cell in a dry room, removing the negative electrode and measuring its thickness (t₁) with the same micrometer. The volume expansion can be calculated by (t₁-t₀)/(t₀-t_{c}) assuming a constant surface area. The volume expansion after 50 cycles is obtained using the identical protocol except that the half cell is disassembled after the 51^{st} discharge.

Capacity retention after 50 cycles and volume expansion after 50 cycles are shown in Table 1. Normalized capacity with cycle number is illustrated for Example 1 and Comparative Example 1 in the Figure showing a reduced fade for Example 1 after multiple cycles.

Each of the Comparative Examples used compositions that had already been optimized for use. Nevertheless, the Comparative Examples show poorer values of either capacity retention, volume expansion or both than do the Examples containing carbon nanotubes.

The value of volume expansion for Example 5 was higher than for the other Examples and was similar to that of Comparative Example 3. However, the capacity retention of Comparative Example 3 was 50% compared to 95% for Example 5. This indicates that only half of the Li species were present in the composition of Comparative Example 3 after 50 cycles compared to 95% of the Li species being retained in Example 5 after 50 cycles. Since the amount of volume expansion is thought to depend on the amount of Li species present in the composition, the volume expansion of Comparative Example 3 is significantly more sensitive to the presence of Li that that of Example 5.

A number of embodiments of the invention have been described. Nevertheless, it will be understood that various modifications can be made without departing from the spirit and scope of the invention. Accordingly, other embodiments are within the scope of the claims.

Embodiments of the invention include the following embodiments 1 to 15.

### EMBODIMENTS

Embodiment 1 is an electrode composition comprising: a silicon alloy comprising silicon, iron and optionally carbon the silicon alloy being capable of undergoing lithiation and delithiation; graphitic carbon, a binder, and a conductive additive comprising carbon nanotubes.

Embodiment 2 is a composition according to embodiment 1, wherein the composition comprises 10wt% to 80wt% silicon alloy.

Embodiment 3 is a composition according to either embodiment 1 or embodiment 2, wherein the composition comprises 80wt% to 10wt% graphitic carbon.

Embodiment 4 is a composition according to any one of the preceding embodiments, wherein the composition comprises 2wt% to 15wt% binder.

Embodiment 5 is 1 composition according to any one of the preceding embodiments, wherein the composition comprises 0.2wt% to 10wt% carbon nanotubes.

Embodiment 6 is 1 composition according to any one of the preceding embodiments, wherein the binder comprises polyacrylate.

Embodiment 7 is a composition according to embodiment 6, wherein the binder comprises lithium polyacrylate.

Embodiment 8 is a composition according to any one of the preceding embodiments wherein the silicon alloy is of formula SiₓFe_{y}C_{z}, where x, y and z represent atomic percent values and
a) x > 2y + z, and
b) x, y and z are each greater than 0.

Embodiment 9 is 1 composition according to embodiment 8 wherein x ≥ 60, and/or y ≥ 5.

Embodiment 10 is a composition according to any one of the preceding embodiments, wherein the alloy comprises from about 60 to about 80 atomic percent silicon, from about 5 to about 20 atomic percent iron, and from about 5 to about 15 atomic percent carbon.

Embodiment 11 is a composition according to any one of the preceding embodiments wherein the silicon alloy further comprises one or more metals selected from cobalt, nickel, titanium, molybdenum, tungsten or combinations thereof.

Embodiment 12 is an electrochemical cell comprising: a positive electrode; a negative electrode; and an electrolyte, wherein the negative electrode comprises a composition according to any one of the preceding embodiments.

Embodiment 13 is a battery pack comprising at least one cell according to embodiment 12.

Embodiment 14 is a method of making an electrochemical cell electrode, the method comprising:
providing a current collector; providing an electrode composition according to any one of embodiments 1 to 11; and applying to the current collector a coating that comprises the electrode composition.

Embodiment 15 is a method according to embodiment 14, wherein applying the coating further comprises:
mixing the electrode composition with a solvent to form a dispersion; milling the dispersion to form a coatable mixture; coating the mixture onto the current collector; and
drying the coated current collector.

## Claims

1. An electrode composition comprising:
a silicon alloy capable of undergoing lithiation and delithiation
graphitic carbon,
a binder, and
a conductive additive comprising carbon nanotubes, **characterized in** the silicon alloy having as formula SixFeyCz, where x, y and z represent atomic percent values and a) x > 2y + z, and b) x, y and z are each greater than 0.

2. A composition as claimed in claim 1, wherein the composition comprises 10wt% to 80wt% silicon alloy.

3. A composition as claimed in claim 1, wherein the composition comprises 80wt% to 10wt% graphitic carbon.

4. A composition as claimed in claim 1, wherein the composition comprises 2wt% to 15wt% binder.

5. A composition as claimed in claim 1, wherein the composition comprises 0.2wt% to 10wt% carbon nanotubes.

6. A composition as claimed in claim 1, wherein the binder comprises polyacrylate.

7. A composition as claimed in claim 6, wherein the binder comprises lithium polyacrylate.

8. A composition as claimed in claim 1 wherein x>60, and/or y>5.

9. A composition as claimed in claim 1, wherein the alloy comprises from about 60 to about 80 atomic percent silicon, from about 5 to about 20 atomic percent iron, and from about 5 to about 15 atomic percent carbon.

10. A composition as claimed in claim 1 wherein the silicon alloy further comprises one or more metals selected from cobalt, nickel, titanium, molybdenum, tungsten or combinations thereof.

11. An electrochemical cell comprising:
a positive electrode;
a negative electrode; and
an electrolyte,
wherein the negative electrode comprises a composition as claimed in claim 1.

12. A battery pack comprising at least one cell according to claim 11.

13. A method of making an electrochemical cell electrode, the method comprising:
providing a current collector;
providing an electrode composition as claimed in claim 1; and
applying to the current collector a coating that comprises the electrode composition.

14. A method as claimed in claim 13, wherein applying the coating further comprises:
mixing the electrode composition with a solvent to form a dispersion;
milling the dispersion to form a coatable mixture;
coating the mixture onto the current collector; and
drying the coated current collector.

## Patentansprüche

1. Elektrodenzusammensetzung, umfassend:
eine Siliciumlegierung, die
einer Lithiierung und Delithiierung unterzogen werden kann,
graphitischen Kohlenstoff,
ein Bindemittel und
einen leitfähigen Zusatzstoff, umfassend Kohlenstoff-Nanoröhrchen,
**dadurch gekennzeichnet, dass** die Siliciumlegierung als Formel SixFeyCz aufweist, wobei x, y und z für Atomprozentwerte stehen und a) x > 2y + z und b) x, y und z jeweils größer als 0 sind.

2. Zusammensetzung nach Anspruch 1, wobei die Zusammensetzung 10 Gew.-% bis 80 Gew.-% Siliciumlegierung umfasst.

3. Zusammensetzung nach Anspruch 1, wobei die Zusammensetzung 80 Gew.-% bis 10 Gew.-% graphitischen Kohlenstoff umfasst.

4. Zusammensetzung nach Anspruch 1, wobei die Zusammensetzung 2 Gew.-% bis 15 Gew.-% Bindemittel umfasst.

5. Zusammensetzung nach Anspruch 1, wobei die Zusammensetzung 0,2 Gew.-% bis 10 Gew.-% Kohlenstoff-Nanoröhrchen umfasst.

6. Zusammensetzung nach Anspruch 1, wobei das Bindemittel Polyacrylat umfasst.

7. Zusammensetzung nach Anspruch 6, wobei das Bindemittel Lithiumpolyacrylat umfasst.

8. Zusammensetzung nach Anspruch 1, wobei x > 60 und/oder y > 5.

9. Zusammensetzung nach Anspruch 1, wobei die Legierung von etwa 60 bis etwa 80 Atomprozent Silicium, von etwa 5 bis etwa 20 Atomprozent Eisen und von etwa 5 bis etwa 15 Atomprozent Kohlenstoff umfasst.

10. Zusammensetzung nach Anspruch 1, wobei die Siliciumlegierung ferner ein oder mehrere Metalle umfasst, ausgewählt aus Kobalt, Nickel, Titan, Molybdän, Wolfram oder Kombinationen davon.

11. Elektrochemische Zelle, umfassend:
eine positive Elektrode;
eine negative Elektrode; und
einen Elektrolyten,
wobei die negative Elektrode eine Zusammensetzung nach Anspruch 1 umfasst.

12. Akkupack, umfassend mindestens eine Zelle nach Anspruch 11.

13. Verfahren zur Herstellung einer elektrochemischen Zellelektrode, wobei das Verfahren Folgendes umfasst:
Bereitstellen eines Stromkollektors;
Bereitstellen einer Elektrodenzusammensetzung nach Anspruch 1; und
Auftragen einer Beschichtung auf den Stromkollektor, welche die Elektrodenzusammensetzung umfasst.

14. Verfahren nach Anspruch 13, wobei das Auftragen der Beschichtung ferner Folgendes umfasst:
Mischen der Elektrodenzusammensetzung mit einem Lösungsmittel, um eine Dispersion zu bilden;
Mahlen der Dispersion, um eine beschichtbare Mischung zu bilden;
Beschichten des Stromkollektors mit der Mischung; und
Trocknen des beschichteten Stromkollektors.

## Revendications

1. Composition d'électrode comprenant :
un alliage de silicium susceptible de
subir une lithiation et une délithiation,
du carbone graphitique,
un liant, et
un additif conducteur comprenant des nanotubes de carbone,
**caractérisé en ce que** l'alliage de silicium est de formule SixFeyCz, où x, y et z représentent des valeurs de pourcentage atomique et a) x > 2y + z, et b) x, y et z sont chacun supérieurs à 0.

2. Composition selon la revendication 1, où la composition comprend 10 % en poids à 80 % en poids d'alliage de silicium.

3. Composition selon la revendication 1, où la composition comprend 80 % en poids à 10 % en poids de carbone graphitique.

4. Composition selon la revendication 1, où la composition comprend 2 % en poids à 15 % en poids de liant.

5. Composition selon la revendication 1, où la composition comprend 0,2 % en poids à 10 % en poids de nanotubes de carbone.

6. Composition selon la revendication 1, dans laquelle le liant comprend du polyacrylate.

7. Composition selon la revendication 6, dans laquelle le liant comprend du polyacrylate de lithium.

8. Composition selon la revendication 1, dans laquelle x>60, et/ou y>5.

9. Composition selon la revendication 1, dans laquelle l'alliage comprend d'environ 60 à environ 80 pour cent atomiques de silicium, d'environ 5 à environ 20 pour cent atomiques de fer, et d'environ 5 à environ 15 pour cent atomiques de carbone.

10. Composition selon la revendication 1, dans laquelle l'alliage de silicium comprend en outre un ou plusieurs métaux choisis parmi le cobalt, le nickel, le titane, le molybdène, le tungstène ou leurs combinaisons.

11. Cellule électrochimique comprenant :
une électrode positive ;
une électrode négative ; et
un électrolyte,
dans laquelle l'électrode négative comprend une composition selon la revendication 1.

12. Bloc batterie comprenant au moins une cellule selon la revendication 11.

13. Procédé de fabrication d'une électrode de cellule électrochimique, le procédé comprenant :
la fourniture d'un collecteur de courant ;
la fourniture d'une composition d'électrode selon la revendication 1 ; et
l'application au collecteur de courant d'un revêtement qui comprend la composition d'électrode.

14. Procédé selon la revendication 13, dans lequel l'application du revêtement comprend en outre :
le mélange de la composition d'électrode avec un solvant pour former une dispersion ;
le broyage de la dispersion pour former un mélange pouvant être revêtu ;
le revêtement du mélange sur le collecteur de courant ; et
le séchage du collecteur de courant revêtu.
